# EUROPÄISCHE PATENTSCHRIFT

(11) **EP 0 634 007 B1**
(45) Veröffentlichungstag und Bekanntmachung des Hinweises auf die Patenterteilung: **05.06.1996**
(21) Anmeldenummer: 93905260.1
(22) Anmeldetag: 19.02.1993
(51) Int. Cl.: G01L 3/14

(54) **ANORDNUNG ZUM MESSEN DES DREHMOMENTS BEI EINEM ZAHNRÄDERGETRIEBE ZUM ÜBERTRAGEN EINER DREHBEWEGUNG**
TORQUE-MEASURING ARRANGEMENT IN A GEAR DRIVE FOR TRANSMITTING A ROTARY MOVEMENT
DISPOSITIF POUR MESURER LE COUPLE DANS UN ENGRENAGE AFIN DE TRANSMETTRE UN MOUVEMENT ROTATIF

(30) Priorität: 02.04.1992 DE 4210990
(43) Veröffentlichungstag der Anmeldung: 18.01.1995
(73) Patentinhaber: Heidelberger Druckmaschinen Aktiengesellschaft, D-69019 Heidelberg (DE)
(72) Erfinder: KIPPHAN, Helmut, D-6830 Schwetzingen (DE); TESSMANN, Uwe, D-6907 Nussloch (DE)
(74) Vertreter: Stoltenberg, Heinz-Herbert Baldo
(86) Internationale Anmeldenummer: EP9300396
(87) Internationale Veröffentlichungsnummer: WO9320420

(56) Entgegenhaltungen:
- PATENT ABSTRACTS OF JAPAN vol. 016, no. 193 (P-1349) 11. Mai 1992 & JP-A-40 27 834

## Beschreibung

### Anordnung zum Messen des Drehmoments bei einem Zahnrädergetrlebe zum übertragen einer Drehbewegung

Die Erfindung betrifft eine Drehmomentenmeßanordnung für ein Getriebe zum übertragen einer Drehbewegung, bei dem die Leistung mittels schrägverzahnter Stirnräder übertragen wird.

Bekannte Drehmomentenmeßanordnungen beinhalten eine Meßwelle, die zur Leistungsübertragung in der Zahnräderkette eines Zahnrädergetriebes angeordnet ist. In einem definierten axialen Abstand sind der Meßvelle zwei Geber für den Torsionswinkel der Weßvelle zugeordnet, der proportional dem zu messenden Drehmoment ist.

In der Offenlegungsschrift DE 28 15 463 Al und in den Patentschriften DE 31 12 714 C1, FR 1 596 833 und GB 644 234 sind im besagten Abstand je zwei Meßzahnräder auf der Meßvelle befestigt, wobei die Zahnräder neben einer Meßfunktion auch zur Leistungsübertragung dienen können. Die Zähne der Meßzahnräder verursachen beim vorbeilaufen an einem Sensor elektrische Impulse, deren drehmomentabhängige Phasenverschiebung in einer Auswerteeinrichtung ermittelt wird.

Eine ebenfalls nach dem Differenzwinkelprinzip arbeitende Anordnung ist in der Patentschrift DD 257 488 beschrieben, bei der zur Ermittlung des Torsionswinkels einer AntriebsweLle an die vellenenden jeweils ein Drehwinkelgeber gekoppelt ist.
Nachteilig bei diesen Lösungen ist, daß die Sensoren, welche auf die Zähne der Weßzahnräder gerichtet sind, zusätzlichen Einbauraum in radialer Richtung benötigen, daß die Ermittlung der drehmomentabhängigen Phasenverschiebung drehzahlabhängig vorgenommen werden muß, was den Aufwand in der Auswerteeinrichtung erhöht, und daß die Empfindlichkeit und Genauigkeit der Meßanordnung von der Anzahl und der Teilungsgenauigkeit der Weßzahnräder abhängig ist oder durch eine meßvelle mit einer geringen Torsionssteifigkeit verbessert werden kann, was seine Grenzen in der zu übertragenden Leistung und in der damit erhöhten Schwingneigung findet.

Weitere bekannte Drehmomentenmeßeinrichtungen arbeiten mit Kraftmeßeinrichtungen, insbesondere Dehnungsmeßstreifen, die in einem Meßlager oder direkt in der Verzahnung des die Leistung übertragenden Zahnrädergetriebes angeordnet sind (DE 23 26 582 C2). Diese Einrichtungen haben den Nachteil, daß derartige Meßlager eine geringere Steifigkeit aufweisen als herkömmliche Lager gleichen Einbauraumes. Desweiteren wird die Steifigkeit der die Meßlager aufnehmenden Gestelle durch den größeren, für Meßlager benötigten Einbauraum verringert, so daß durch die Integration von Meßlagern insgesamt nachteilige Veränderungen der dynamischen Getriebeeigenschaften hervorgerufen werden.

Der Erfindung liegt die Aufgabe zugrunde, eine Drehmomentenmeßeinrichtung zu entwickeln, die eine direkte Messung des in einem Zahnräderzug übertragenen Drehmomentes ermöglicht, und die eine hohe Steifigkeit der Lagerungen und Getriebeelemente gewährleistet.

Die Aufgabe wird erfindungsgemäß dadurch gelöst, daß bei einer Drehmomentenmeßanordnung für ein Zahnrädergetriebe mit mindestens drei ineinandergreifenden schrägverzahnten Stirnrädern an mindestens einem der Zahnräder ein gestellfester Distanzsensor auf eine Planfläche dieses Zahnrades gerichtet ist, der mit einer Auswerteeinrichtung in Verbindung steht.

Die Erfindung ermöglicht über eine Messung der Verformungen einer Welle bzw. eines Zahnrades die Ermittlung des Drehmoments. Durch die Schrägverzahnung der Stirnräder treten am Umfang der Stirnräder neben tangentialen Umfangskräften auch Kräfte in Richtung der Drehachse des Meßzahnrades auf. Diese Axialkräfte bewirken eine Abbiegung der Welle und des Zahnrades. über die Messung der Durchbiegung kann man in der Auswerteeinrichtung das Drehmoment ermitteln.

Für eine hohe Empfindlichkeit der Meßanordnung ist es von Vorteil, wenn zwei Paare von Distanzsensoren vorgesehen sind, wobei jedes Paar in einer senkrecht zur Drehachse des Meßzahnrades liegenden Ebene auf einen Durchmesser unterhalb des Fußkreisdurchmessers angeordnet sind.
Damit lassen sich Fehler im Planlauf des Meßzahnrades eliminieren, indem die Signale der Paare von Distanzsensoren in der Auswerteeinrichtung phasenrichtig mit den im lastlosen Zustand ermittelten Meßgrößen korrigiert werden.

Hinsichtlich einer optimalen Meßwertgewinnung aus der Zahnradverformung und aus der Wellenverformung ist es vorteilhaft, wenn ein erstes Paar Distanzsensoren auf einer Geraden angeordnet ist, die senkrecht zu den parallelen Achsen der schrägverzahnten Stirnräder liegt und die durch die Durchstoßpunkte der Achsen des Meßzahnrades und des jeweiligen benachbarten Zahnrades mit besagter Ebene verläuft.
Das zweite Paar Distanzsensoren sollte dann auf einer Geraden angeordnet sein, die ebenfalls senkrecht zu den parallelen Achsen liegt und die durch den Durchstoßpunkt der Achse des Meßzahnrades mit der besagten Ebene verläuft und die die Symmetrieachse für das erste Paar bildet.

Eine weitere Möglichkeit der Empfindlichkeitssteigerung ergibt sich dadurch, wenn jedem Distanzsensor diametral zum Meßzahnrad in äquivalenter Position weitere Distanzsensoren zugeordnet sind, die ebenfalls mit der Auswerteschaltung verbunden sind.

Für eine Leistungsregelung im Getriebe ist es von Vorteil, wenn die Auswerteschaltung mit einer Regeleinrichtung für einen Mehrmotorenantrieb verbunden ist.

Ein Ausführungsbeispiel der Erfindung soll anhand einer Zeichnung noch näher erläutert werden.

Es zeigen:
- Fig. 1: ein Kräfteschema an einem Getriebe mit schrägverzahnten Stirnrädern,
- Fig. 2: ein Schema für die Anordnung von Distanzsensoren,
- Fig. 3: eine Sensoranordnung zur Empfindlichkeitssteigerung,
- Fig. 4: ein Schema für die Signalverarbeitung innerhalb eines Mehrmotorenantriebes.

Zur Regelung der Leistung, welche von einem Zahnrädergetriebe übertragen werden soll, kann es erforderlich sein, das Drehmoment zu messen. Insbesondere bei Maschinen, deren Teilaggregate über ein Zahnrädergetriebe von mehreren Motoren angetrieben werden, kann zur Erreichung einer optimalen Leistungsverteilung zwischen den Motoren die Messung des im Zahnrädergetriebe übertragenen Drehmomentes an mindestens einer geeigneten Stelle des Getriebes erforderlich werden.

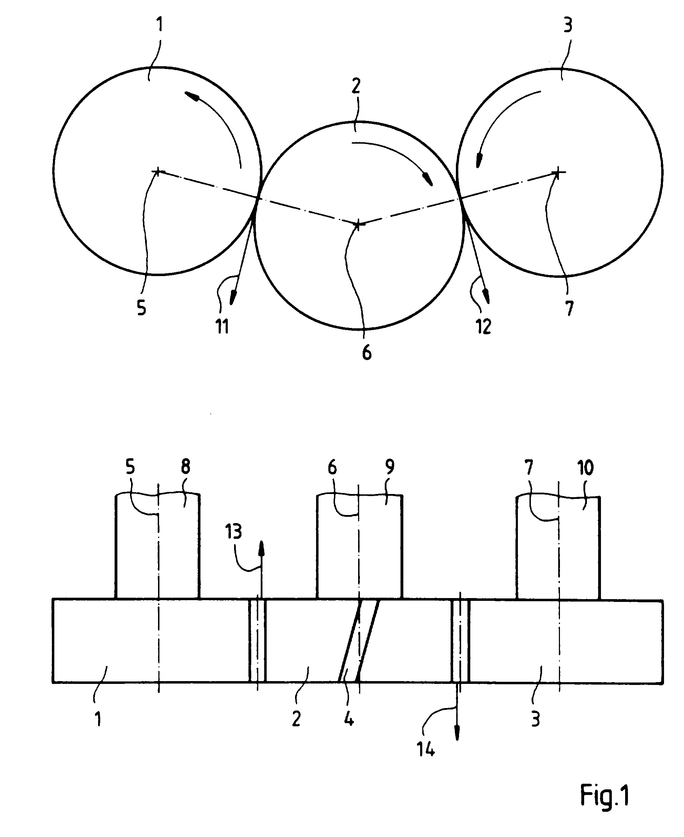

In Fig. 1 sind in Seitenansicht und in Draufsicht drei Zahnräder 1,2,3 dargestellt, die eine Schrägverzahnung 4 aufweisen. Die Achsen 5,6,7 der Wellen 8,9,10 liegen parallel und haben einen festen Abstand zueinander. Wenn über die Zahnräder 1,2,3 eine Leistung übertragen wird, dann treten an diesen tangentiale Umfangskräfte 11 und 12 sowie infolge der Schrägverzahnung Kräfte 13 und 14 in Richtung der Achsen 5,6,7 auf. Die erfindungsgemäße Meßanordnung beruht darauf, daß die durch die Kräfte 13 und 14 an den Wellen 8,9,10 und an den Zahnrädern 1,2,3 auftretenden elastischen Verformungen gemessen werden.

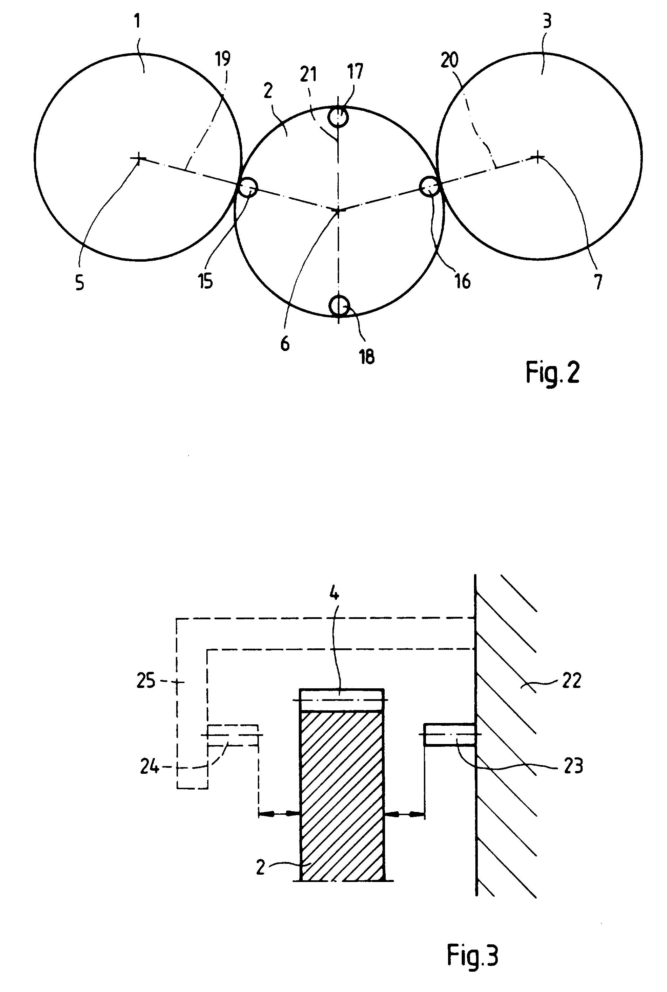

Dazu sind, wie in Fig. 2 gezeigt, auf die PLanfläche des Zahnrades 2, welches als Meßzahnrad dient, zwei Paare Distanzsensoren 15 und 16 und 17,18 gerichtet. Das erste Paar Distanzsensoren 15,16 liegt in der Seitenansicht auf einer Verbindungslinie 19 bzw. 20 der Durchstoßpunkte der Achsen 5 und 6 bzw. 6 und 7 der Zahnräder 1 und 2 bzw. 2 und 3 in der Nähe des Fußkreisdurchmessers des Zahnrades 2. Das zweite Paar Distanzsensoren 15,16 liegt auf einer Symmetrieachse 21 für das erste Paar Distanzsensoren 15,16. Zur Empfindlichkeitssteigerung kann jedem ortsfest in einem Gestell 22 installierten Distanzsensor 23 jeweils diametral dem Zahnrad 2 gegenüberliegend ein weiterer Distanzsensor 24 zugeordnet sein, der ebenfalls ortsfest in einer Halterung 25 installiert ist, die mit dem Gestell 22 fest verbunden ist. Die Distanzsensoren 15 und 16 erfassen die Verformung des Zahnrades 2 und die Distanzsensoren 17 und 18 erfassen die Abbiegung der Welle 9.

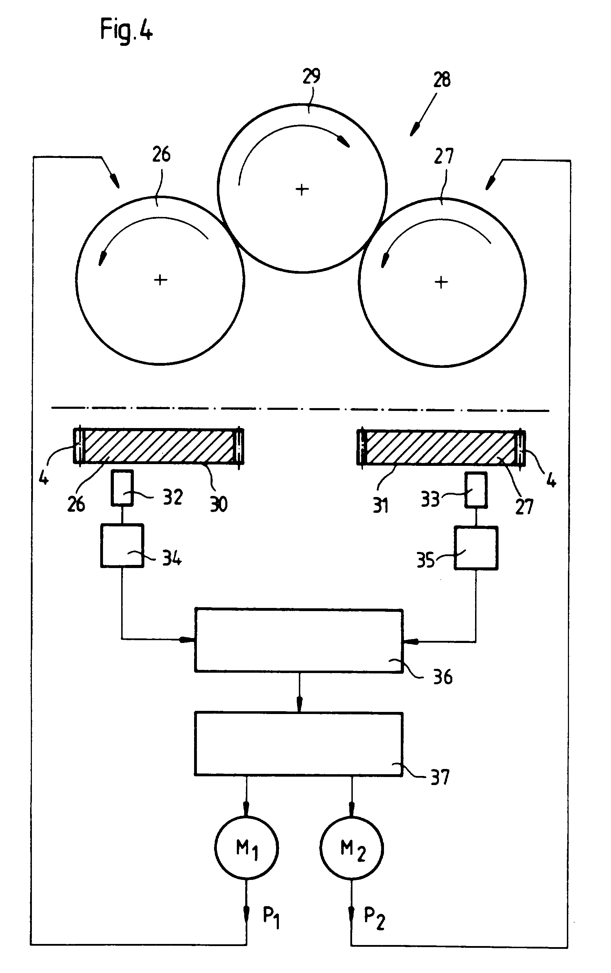

In Fig. 4 ist ein Signalverarbeitungsschema für einen Mehrmotorenantrieb dargestellt, in dem zwei erfindungsgemäße Meßanordnungen enthalten sind. Gemäß dieser Darstellung wird die von Motoren M₁ und M₂ erzeugte Leistung P₁ und P₂ über die Wellen von Zahnrädern 26 und 27 in das Zahnrädergetriebe 28 eingespeist, zu dem auch das schrägverzahnte Zwischenrad 29 gehört. Auf die PLanflächen 30,31 der Zahnräder 26,27 sind jeweils Distanzsensoren 32,33 gerichtet, die über Oszillatoren 34,35 mit einer Auswerteschaltung 36 verbunden sind. Der Auswerteschaltung 36 ist eine Regeleinrichtung 37 nachgeordnet, die mit den Motoren M₁ und M₂ in Verbindung steht. Als Distanzsensoren 32,33 eignen sich jederart von vorzugsweise berührungslosen hochgenauen und hochauflösenden Sensoren, wie z. B. induktive Geber, Wirbelstromgeber oder Lasertriangulationssensoren. Zur Ermittlung von Absolutwerten des Drehmomentes ist eine Kalibrierung erforderlich. Fehler im Planlauf der Zahnräder 1,2,3 bzw. 26,27, die aus geometrischen Abweichungen herrühren und die Messung verfälschen würden, können innerhalb der Auswerteschaltung 36 durch phasenrichtige Subtraktion der Meßwerte aus den Distanzsensoren 15,16,17,18 bzw. 30,32 eliminiert werden. Bei Anordnung von zwei oder mehreren auf die Planfläche eines Zahnrades 1,2,3 bzw. 26,27 gerichteten
Distanzsensoren 15,16,17,18 bzw. 30,32 kann die Empfindlichkeit der Meßanordnung durch vorzeichenrichtige Verknüpfung der einzelnen Meßsignale und durch eine geeignete Beschaltung von zwei gegenüberliegenden Sensoren 23,24 erhöht werden.
Bei Langzeitmessung kann eine Nullung der Meßanordnung durch Messung bei stillstehendem lastlosen Zahnrädergetriebe in beliebiger aber bekannter Drehwinkelstellung des Meßzahnrades 2 bzw. 26,27 erfolgen, wodurch eine langzeitstabile Absolutwertmessung gewährleistet ist. Die am Ausgang der Auswerteschaltung 36 vorliegenden Signale für das Drehmoment werden einem Eingang der
Regeleinrichtung 37 zugeführt, die in Abhängigkeit vom Betrag und Richtung des Drehmomentes die von den Motoren M₁ und M₂ erzeugte Leistung regelt.

## Patentansprüche

1. Anordnung zum Messen des Drehmomentes bei einem Zahnrädergetriebe zum übertragen einer Drehbewegung, bei der im Zahnrädergetriebe mindestens drei ineinandergreifende schrägverzahnte Stirnräder (1,2,3;26,27,29), mit parallelen Achsen (5,6,7) vorgesehen sind,
**dadurch gekennzeichnet**,
daß an mindestens einem der Zahnräder (1,2,3;26,27) mindestens ein Distanzsensor (15,16,17,18;30,32) auf eine Planfläche (30,31) dieses Zahnrades (1,2,3;26,27) gerichtet ist, wobei der
Distanzsensor (15,16,17,18;30,32) gestellfest installiert ist und mit einer Auswerteschaltung (36) in Verbindung steht.

2. Anordnung nach Anspruch 1,
**dadurch gekennzeichnet**,
daß zwei Paare von Distanzsensoren (15,16,17,18) installiert sind, wobei jedes Paar in einer senkrecht zu den parallelen Achsen (5,6,7) liegenden Ebene auf einen Durchmesser in der Nähe des Fußkreisdurchmessers angeordnet sind.

3. Anordnung nach Anspruch 2,
**dadurch gekennzeichnet**,
- daß die Distanzsensoren (15,16) des ersten Paares jeweils auf einer Geraden (19,20) angeordnet sind, die senkrecht zu den parallelen Achsen (5,6,7) liegt, und die durch die Durchstoßpunkte der Achsen (5,6,7) des Zahnrades (2) und des jeweiligen benachbarten Zahnrades (1,3) mit besagter Ebene verläuft und
- daß die Distanzsensoren (17,18) des zweiten Paares auf einer Geraden (21) angeordnet sind, die senkrecht zu den parallelen Achsen (5,6,7) liegt, die durch den Durchstoßpunkt der Achse (6) des Zahnrades (2) mit der besagten Ebene verläuft, und die die Symmetrieachse (21) für das erste Paar bildet.

4. Anordnung nach Anspruch 2,
**dadurch gekennzeichnet**,
daß jedem Distanzsensor (23) diametral zum Zahnrad (2) in äquivalenter Position ein weiterer Distanzsensor (24) zugeordnet ist, wobei die weiteren Distanzsensoren (24) ebenfalls mit der Auswerteschaltung (36) verbunden sind.

5. Anordnung nach Anspruch 1,
**dadurch gekennzeichnet**,
daß die Auswerteschaltung (36) mit einer Regeleinrichtung (37) für einen Mehrmotorenantrieb verbunden ist.

## Claims

1. Arrangement for measuring the torque in a toothed gearing for transmitting a rotational movement, in which at least three intermeshing helically toothed spur wheels (1, 2, 3; 26, 27, 29) having parallel axes (5, 6, 7) are provided in the toothed gearing, characterized in that, on at least one of the gearwheels (1, 2, 3; 26, 27), at least one distance sensor (15, 16, 17, 18; 30, 32) is directed onto a plane face (30, 31) of this gearwheel (1, 2, 3; 26, 27), the distance sensor (15, 16, 17, 18; 30, 32) being installed fixedly relative to the frame and being connected to an evaluation circuit (36).

2. Arrangement according to Claim 1, characterized in that two pairs of distance sensors (15, 16, 17, 18) are installed, each pair being arranged in a plane perpendicular to the parallel axes (5, 6, 7), on a diameter in proximity to the root diameter.

3. Arrangement according to Claim 2, characterized
- in that the distance sensors (15, 16) of the first pair are arranged in each case on a straight line (19, 20) which is perpendicular to the parallel axes (5, 6, 7) and which runs through the piercing points of the axes (5, 6, 7) of the gearwheel (2) and of the respective adjacent gearwheel (1, 3) relative to the said plane, and
- in that the distance sensors (17, 18) of the second pair are arranged on a straight line (21) which is perpendicular to the parallel axes (5, 6, 7) and which runs through the piercing point of the axes (6) of the gearwheel (2) relative to the said plane and forms the axis of symmetry (21) for the first pair.

4. Arrangement according to Claim 2, characterized in that a further distance sensor (24) is assigned to each distance sensor (23) diametrically to the gearwheel (2) in an equivalent position, the further distance sensors (24) likewise being connected to the evaluation circuit (36).

5. Arrangement according to Claim 1, characterized in that the evaluation circuit (36) is connected to a regulating device (37) for a multi-motor drive.

## Revendications

1. Montage de mesure du couple de rotation d'une transmission à engrenages destinée à transmettre un mouvement de rotation, dans lequel au moins trois roues droites à denture hélicoïdale (1, 2, 3 ; 26, 27, 29) engrenant les unes avec les autres et à axes parallèles (5, 6, 7) sont prévues,
caractérisé
en ce qu'au moins un détecteur de distance (15, 16, 17, 18 ; 30, 32) est orienté sur une roue dentée (1, 2, 3 ; 26, 27), sur une surface plane (30, 31) de cette roue dentée (1, 2, 3 ; 26, 27), le détecteur de distance (15, 16, 17, 18 ; 30, 32) étant installé en position fixe sur le bâti et étant relié à un circuit de dépouillement (36).

2. Montage selon la revendication 1,
caractérisé
en ce que deux paires de détecteurs de distance (15, 16, 17, 18) sont installées, chaque paire étant disposée dans un plan perpendiculaire aux axes parallèles (5, 6, 7), sur un diamètre qui est à proximité du diamètre de pied.

3. Montage selon la revendication 2,
caractérisé
- en ce que chacun des détecteurs de distance (15, 16) de la première paire est disposé sur une droite (19, 20) qui est perpendiculaire aux axes parallèles (5, 6, 7) et qui passe par les points auxquels les axes (5, 6, 7) de la roue dentée (2) et de chaque roue dentée voisine (1, 3) traverse ledit plan et
- en ce que les détecteurs de distance (17, 18) de la seconde paire sont disposés sur une droite (21) qui est perpendiculaire aux axes parallèles (5, 6, 7), qui passe par le point auquel l'axe (6) de la roue dentée (2) passe à travers ledit plan et qui forme l'axe de symétrie (21) de la première paire.

4. Montage selon la revendication 2,
caractérisé
en ce qu'un autre détecteur de distance (24) est associé à chaque détecteur de distance (23), diamétralement par rapport à la roue dentée (2) et en position équivalente, les autres détecteurs de distance (24) étant également reliés au circuit de dépouillement (36).

5. Montage selon la revendication 1,
caractérisé
en ce que le circuit de dépouillement (36) est relié à un dispositif (37) de réglage d'une commande à plusieurs moteurs.
